# EUROPEAN PATENT APPLICATION

(11) **EP 3 838 216 A1**
(43) Date of publication of application: **23.06.2021**
(21) Application number: 20199103.1
(22) Date of filing: 29.09.2020
(51) Int. Cl.: A61C 8/00

(54) **BONE-BONDED ARTIFICIAL TOOTH STRUCTURE**

(30) Priority: 19.12.2019 TW 108146775
(71) Applicant: Deng, Yun-Wen, New Taipei City 241659 (TW)
(72) Inventor: Deng, Yun-Wen, New Taipei City 241659 (TW)
(74) Representative: Cabinet Chaillot

(57) **Abstract**

A bone-bonded artificial tooth structure for fixing to a patient's partially atrophied and gum covered alveolar bone includes a base portion having opposed lower and upper connecting sections located below and above a peak of the atrophied alveolar bone, respectively, the lower connecting section being in contact with the atrophied alveolar bone, and one side of the upper connecting section opposed to the atrophied alveolar bone defining a connecting surface; a tooth portion fixed to the connecting surface; and a dental anchor having an anchoring section inserted into the atrophied alveolar bone and another anchoring section inserted in the base portion to restrict the base portion from displacing relative to the alveolar bone. The bone-bonded artificial tooth structure fixed to the alveolar bone can immediately provide good supporting strength for chewing food without needing to wait for a long time for the osseointegration of the bone with the base portion.

## Description

### FIELD OF THE INVENTION

The present invention relates to an artificial tooth structure that can be customized for different patients, and more particularly, to a bone-bonded artificial tooth structure that can be securely fixed to an atrophied alveolar bone.

### BACKGROUND OF THE INVENTION

In the past, removable dentures or fixed dental crowns and gum were used to treat a patient's miss teeth, particularly when a large number of teeth are missing. Recently, with the introduction of the tooth implant techniques into the prosthodontic field, the patient with missing teeth now may choose to get single or multiple teeth implant or even a full-mouth dental implant.

For a patient having a healthy alveolar bone, dental implant is usually used to replace one or more missing teeth. In the dental implant, an implant is placed into the alveolar bone of the patient's upper or lower jawbone, so that the implant forms an artificial tooth root under the patient's gum. The shape, size and type of the implant are selected according to the state at the missing tooth, and the placement of the implant is performed with different surgical instruments and different surgical operations. After the artificial tooth root is completed, an artificial dental crown is fixedly mounted on the artificial tooth root, so that it is firmly supported on the alveolar bone by the artificial tooth root.

However, for a patient having a badly atrophied alveolar bone, i.e. with an almost completely resorbed alveolar bone and even a severely resorbed basal bone, it is impossible to place the implant into the atrophied alveolar bone. In this case, the patient generally needs to reconstruct the atrophied alveolar bone with an artificial alveolar bone and the implant is then placed into the artificial alveolar bone in subsequent procedures. However, this type of alveolar bone reconstruction through bone augmentation involves complicated surgical procedures and requires a relatively long time to complete, and could not be performed in the case of a special oral cavity condition that requires customized treatments.

Besides, the placement direction and the placement location of the implants are very important in missing tooth treatment. Inaccurately placed implants would result in misaligned upper and lower jaws and tend to separate from the alveolar bone easily. Therefore, a complete pre-treatment plan and a precise bone drilling for the implant during the surgical operation are important factors for increasing the successful rate of dental implant treatment.

However, both of the above two factors depend on a dentist's or an oral surgeon's clinical experiences and surgical skills. In the event the alveolar bone is not drilled with sufficient stability or the oral cavity vision in three-dimensional space is not well controlled, it is possibly to damage the facial nerve or cause bony crack of the alveolar bone.

Further, since the implant is made of a metal material that is obviously different from the alveolar bone tissue, these two components are not easily tightly bonded to each other. When the artificial tooth roots are fixedly placed, the patient has to wait for additional three to six months for the osseointegration until the alveolar bone cells regenerate and the augmented alveolar bone is bonded to the gaps between the threads on the artificial implant.

In view of the drawbacks in the conventional dental implant treatments that the placement of the implant and the reconstruction of the alveolar bone all require a relatively long time to complete the whole surgical procedures, that the successful rate of dental implant depends on the dentist's and the surgeon's clinical experiences, and that the artificial implant could not be applied to all kinds of missing teeth, it is therefore tried by the inventor to develop an improved artificial tooth structure to overcome the disadvantages of the conventional missing teeth treatments.

### SUMMARY OF THE INVENTION

A primary object of the present invention is to provide an improved artificial tooth structure, which can be fixed to a patient's alveolar bone to provide an immediate supporting strength sufficient for resisting a bite force when chewing food, allowing the patient to eat foods requiring chewing immediately after the tooth implant without needing to wait for the osseointegration of the alveolar bone with the implant. Therefore, the inconvenience brought by the conventional artificial tooth implant due to the long time needed for the occurrence of osseointegration can be eliminated.

Another object of the present invention is to provide an improved artificial tooth structure that can be implanted to alveolar bones in various states of atrophies, and can be applied to teeth at different oral locations and having different alveolar bone shapes, including incisors, canines, premolars and molars. Therefore, the present invention largely increases the scope of application of the artificial tooth by overcoming the disadvantage of the conventional tooth implant that the cylindrical implant could not be mounted on an alveolar bone having a relatively small contact area surface and accordingly providing insufficient supporting strength.

A further object of the present invention is to provide an improved artificial tooth structure that can be applied to a patient having misaligned teeth or malocclusion by designing an inclined tooth portion for the artificial tooth structure to match inclined original teeth, so that the artificial tooth is aligned with the inclined original teeth to achieve good occlusion, biting and chewing.

A still further object of the present invention is to provide an improved bone-bonded artificial tooth structure that has a base portion, a dental anchor and a tooth portion fabricated using biocompatible biomedical materials, such as zirconium dioxide and titanium alloys, and can be directly installed without the need of using other additional novel materials to meet specific using conditions, allowing a dentist or a oral surgeon to perform the tooth implant efficiently.

To achieve the above and other objects, the bone-bonded artificial tooth structure according to the present invention is designed for fixing to a patient's alveolar bone that is partially atrophied to form a narrowed bone top, and includes a base portion, a tooth portion and a dental anchor.

The base portion includes a lower connecting section, being located lower than a highest point of the narrowed bone top, and an upper connecting section, being located higher than the highest point of the narrowed bone top. The lower connecting section defines a three-dimensional surface completely corresponding to a configuration of a side wall surface of the narrowed bone top, allowing the lower connecting section to fitly and tightly contact with the narrowed bone top, so that the lower connecting section and the narrowed bone top together form a locked part that has an overall thickness larger than that of the narrowed bone top. One side of the upper connecting section facing away from the highest point of the narrowed bone top forms a smooth connecting surface. The tooth portion is fixed to the connecting surface of the base portion. The dental anchor has a partial length being inserted into the narrowed bone top and being defined as a first anchoring section; and other remaining length of the dental anchor is contacted with the base portion and defined as a second anchoring section, such that the base portion is restricted by the dental anchor from displacing relative to the narrowed bone top. The lower connecting section is T-shaped in configuration to have a vertical section and a horizontal section located at a lower end of the vertical section; and the second anchoring section being set outside of the lower connecting section and abutted on an upper side of the horizontal section.

Preferably, one side of the upper connecting section opposed to the connecting surface is defined as a bottom side, the bottom side has a partial area being formed at the lower connecting section, and other remaining area of the bottom side is defined as a pressing surface, the pressing surface is in contact with the highest point of the narrowed bone top. Further, the lower connecting section has a three-dimensional surface completely corresponding to a configuration of a side wall surface of the narrowed bone top, allowing the lower connecting section to fitly and tightly contact with the narrowed bone top.

In a preferred embodiment of the present invention, the lower connecting section is formed of a single independent connecting body, the single independent connecting body is located to one side of the pressing surface, such that the narrowed bone top has one side in contact with the independent connecting body; and another side of the narrowed bone top farther away from the independent connecting body is in contact with the gum that covers the alveolar bone. Further, the bone-bonded artificial tooth structure includes an auxiliary anchor being inserted into the locked part. The dental anchor and the auxiliary anchor can both be inserted from the lower connecting section into the narrowed bone top. Alternatively, the dental anchor is inserted from the lower connecting section into the narrowed bone top while the auxiliary anchor is inserted from the narrowed bone top into the lower connecting section.

In the above embodiment, the dental anchor is inserted into the locked part in a direction parallel to the direction in which the auxiliary anchor is inserted into the locked part; and the dental anchor is vertically spaced from the auxiliary anchor.

In another preferred embodiment of the present invention, the lower connecting section includes a first lower connecting body and a second lower connecting body spaced from the first lower connecting body. The first lower connecting body and the second lower connecting body are separately located at two opposite sides of the pressing surface of the upper connecting section, so that the narrowed bone top is located between the first lower connecting body and the second lower connecting body.

In the above embodiment, the dental anchor is inserted through the first lower connecting body and the narrowed bone top into the second lower connecting body sequentially. In the case of including the auxiliary anchor that is inserted into the locked part, the dental anchor is inserted from the first lower connecting body into the narrowed bone top, while the auxiliary anchor is inserted from the second lower connecting body into the narrowed bone top.

In the above embodiment, the dental anchor and the auxiliary anchor are inserted into the locked part in two oblique directions, and the dental anchor has a partial length extended beyond the auxiliary anchor. That is, the dental anchor and the auxiliary anchor obliquely cross each other.

In the above two embodiments, the tooth portion includes an abutment and a crown. The abutment has a first end and an opposite second end. The first end is connected to the connecting surface and adjoining to the gum covering the alveolar bone; and the second end is connected to the crown.

Moreover, preferably, the tooth portion further includes a fastening screw and a locating element. The fastening screw is threaded through the abutment into the base portion, so as to firmly connect the abutment to the base portion. The crown is covered on a top of the fastening screw. The locating element is threaded through the crown into the abutment.

Further, preferably, the second end of the abutment can be so configured that it is inclined relative to the second end of the abutment; and the base portion and the tooth portion can be integrally formed using the same material. The lower connecting section can be so configured to have a vertical section and a horizontal section located at a lower end of the vertical section, so that the lower connecting section is in a T-shaped configuration. In this case, the second anchoring section of the dental anchor can be abutted on an upper side or a lower side of the horizontal section.

The bone-bonded artificial tooth structure of the present invention is characterized in that the base portion is customized to have different shapes corresponding to the configurations of the atrophied alveolar bone, and differently shaped base portion is fixed to the atrophied alveolar bone using dental anchor. As soon as the base portion is fixed to the atrophied alveolar bone using the dental anchor, the whole artificial tooth can immediately provide good supporting strength sufficient to resist the bite force during chewing foods, allowing the patient to eat foods requiring chewing immediately after the dental implant without the need of waiting for the osseointegration of the alveolar bone with the base portion. Therefore, the inconvenience brought by the conventional artificial tooth implant due to the long time needed for the occurrence of osseointegration can be eliminated.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a sectional side view of a bone-bonded artificial tooth structure according to a first embodiment of the present invention;
Fig. 2 is a sectional side view of a bone-bonded artificial tooth structure according to a second embodiment of the present invention;
Fig. 3 is a sectional view showing an auxiliary anchor is inserted from a narrowed bone top of a patient's alveolar bone into an independent connecting body that forms a part of the bone-bonded artificial tooth structure;
Fig. 4 is a sectional side view of a bone-bonded artificial tooth structure according to a third embodiment of the present invention;
Fig. 5 is a sectional side view of a bone-bonded artificial tooth structure according to a fourth embodiment of the present invention;
Figs. 6A and 6B are sectional elevation and sectional side views, respectively, of a bone-bonded artificial tooth structure according to a fifth embodiment of the present invention;
Figs. 7A and 7B are sectional elevation and sectional side views, respectively, showing a dental anchor inserted into the patient's alveolar bone is abutted against an upper side of a horizontal section of the independent connecting body;
Fig. 8 is a sectional elevation view similar to Fig. 7B showing the dental anchor inserted into the patient's alveolar bone is partially locked into the horizontal section of the independent connecting body;
Fig. 9 is a sectional side view of a bone-bonded artificial tooth structure according to a sixth embodiment of the present invention;
Fig. 10 is a sectional side view showing the dental anchor is inserted into the narrowed bone top and a first lower connecting body while the auxiliary anchor is inserted into the narrowed bone top and a second lower connecting body;
Fig. 11 is a sectional side view of a bone-bonded artificial tooth structure according to a seventh embodiment of the present invention; and
Fig. 12 is a sectional side view of a bone-bonded artificial tooth structure according to an eighth embodiment of the present invention.

### DETAILED DESCRIPTION OF THE PREFERRED EMBODIMENTS

The present invention will now be described with some preferred embodiments and by referring to the accompanying drawings. For the purpose of easy to understand, elements that are the same in the preferred embodiments are denoted by the same reference numerals.

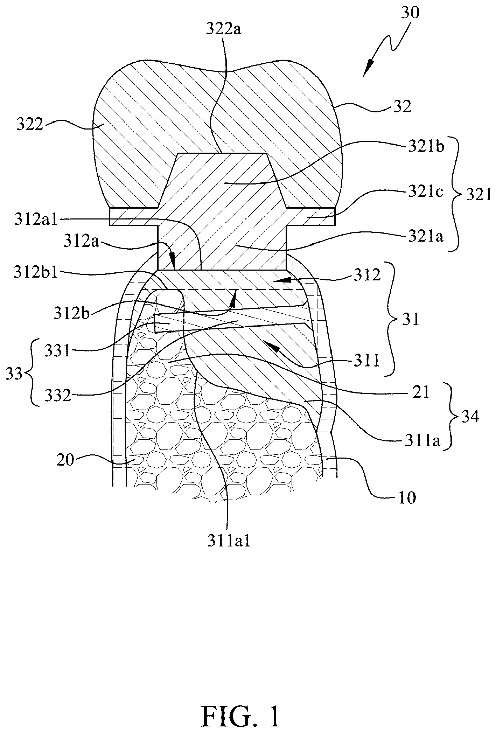

Please refer to Fig. 1. When a patient wants to have a bone-bonded artificial tooth structure 30 to replace a missing tooth in his/her oral cavity, a dentist will first cut open the patient's gum 10 around the missing tooth to expose a part of the patient's alveolar bone 20 that is initially covered by the gum 10 and then implants the bone-bonded artificial tooth structure 30 into the exposed alveolar bone 20. Bone atrophy tends to occur gradually at the alveolar bone 20 when the tooth is missing for a long time without replacing it with an artificial tooth or placing a dental implant. As can be seen in the drawing, the atrophied alveolar bone 20 will finally form a narrowed top portion that has a thickness smaller than that of the initial alveolar bone 20. The narrowed top portion of the alveolar bone 20, briefly referred to as the narrowed bone top and denoted by reference numeral 21 herein, is substantially in a conical shape having a gradually downward expanded configuration.

The bone-bonded artificial tooth structure 30 can be preferably formed in three different manners. In the first manner, a three-dimensional (3D) file is output from a computer tomography (CT) scanning of the patient's alveolar bone 20 at the missing tooth and an artificial tooth model is created from the 3D file using 3D printing. In the second manner, the gum 10 is cut open and the patient's oral cavity is scanned to obtain a 3D file, and then an artificial tooth model is created using 3D printing. In the third manner, the gum 10 is cut open and a dental impression is made using an impression material, and then an artificial tooth model is made using gypsum or other appropriate materials based on the dental impression.

In the first embodiment as shown in Fig. 1, the bone-bonded artificial tooth structure 30 includes a base portion 31, a tooth portion 32 and a dental anchor 33. The base portion 31 is designed to be entirely fixed below the gum 10 and is divided into a lower connecting section 311 that located lower than a highest point of the narrowed bone top 21, and an upper connecting section 312that located higher than the highest point of the narrowed bone top 21. The lower connecting section 311 is formed of a single independent connecting body 311a, which defines a 3D surface 311a1 completely corresponding to a configuration of a side wall surface of the narrowed bone top 21. The 3D surface 311a1 has one side in contact with the narrowed bone top 21, so that the narrowed bone top 21 and the lower connecting section 311 together form a locked part 34 that has an overall thickness larger than that of the narrowed bone top 21. More specifically, the 3D surface 311a1 of the lower connecting section 311 can fitly and tightly contact with the narrowed bone top 21 without leaving any clearance between them. As shown in Fig. 1, the upper connecting section 312 has an upper side forming a top side 312a and a lower side forming a bottom side 312b. The top side 312a is located higher than the highest point of the narrowed bone top 21 and defines a smooth connecting surface 312a1. The bottom side 312b has a large part being integrally formed with the lower connecting section 311, while other parts of the bottom side 312b defines a pressing surface 312blthat is different from the connecting surface 312a1 in shape. In the illustrated first embodiment, the pressing surface 312b1 is in contact with the highest point of the narrowed bone top 21 and is located to one side of the independent connecting body 311a.

The tooth portion 32 is fixed to the connecting surface 312a1 of the base portion 31, and includes an abutment 321 and a crown 322 that forms an occlusal surface. The abutment 321 has two opposite ends, i.e. a first end 321a and a second end 321b. The first end 321a is in connected to the connecting surface 312a1 and adjoining to the patient's gum 10. The second end 321b is connected to the crown 322. In the illustrated first embodiment, the base portion 31, the abutment 322 and the crown 322 are fixedly held to one another using an adhesive material (not shown). As shown, the first end 321a of the abutment 321 forms a bottom portion that is in contact with the base portion 31 and the gum 10 at the same time, and the second end 321b of the abutment 321 forms a top portion that is in contact with the crown 322 only. The abutment 321 further has a contact plate portion 321c that is peripherally outward extended from between the bottom portion and the top portion. The crown 322 is formed with a downward opened recess 322a located and shaped corresponding to the top portion of the abutment 321 and has a bottom surface configured for fitly adhering to the contacting plate portion 321c.

The dental anchor 33 is inserted from the independent connecting body 311a of the base portion 31 toward the narrowed bone top 21 of the alveolar bone 20 into the locked part 34, so that the base portion 31 is fixedly locked to the narrowed bone top 21 via the dental anchor 33 and is restricted by the dental anchor 33 from displacing relative to the narrowed bone top 21. As shown, a partial length of the dental anchor 33 that is inserted into the narrowed bone top 21 is defined as a first anchoring section 331, and other length of the dental anchor 33 that is contacted with the lower connecting section 311 and in contact with the independent connecting body 311a is defined as a second anchoring section 332. The dental anchor 33 having been inserted into the locked part 34 would leave a small portion projected from the lower connecting section 311 of the base portion 31. This projected small portion of the dental anchor 33 can be polished away by the dentist, so that the dental anchor is flush with the surface of the lower connecting section 311 to form a continuous curved surface.

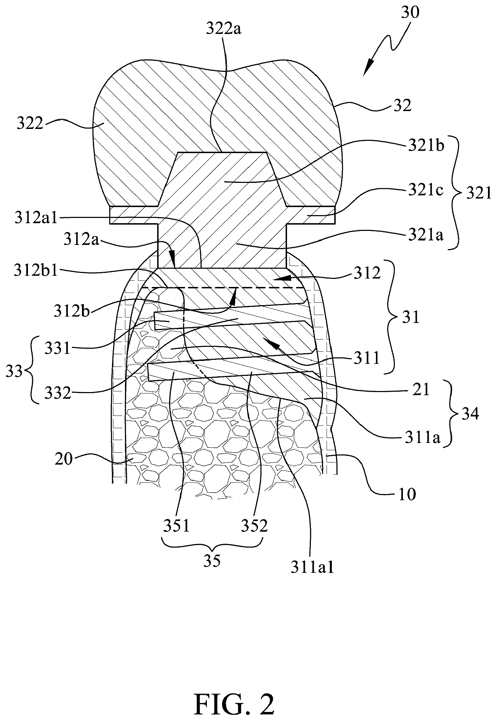

Please refer to Fig. 2 that shows a second embodiment of the present invention. The second embodiment is different from the first one in that the bone-bonded artificial tooth structure 30 further includes an auxiliary anchor 35, i.e. the bone-bonded artificial tooth structure 30 in the second embodiment of the present invention includes a base portion 31, a tooth portion 32, a dental anchor 33 and an auxiliary anchor 35. As shown in Fig. 2, like the dental anchor 33, the auxiliary anchor 35 is inserted from the independent connecting body 311a of the base portion 31 toward the narrowed bone top 21 of the alveolar bone 20 into the locked part 34. A partial length of the auxiliary anchor 35 that is inserted into the narrowed bone top 21 is defined as a first auxiliary section 351, and other length of the auxiliary anchor 35 that is contacted with the lower connecting section 311 and in contact with the independent connecting body 311a is defined as a second auxiliary section 352. In the illustrated second embodiment, the dental anchor 33 is inserted into the locked part 34 in a direction parallel to the direction in which the auxiliary anchor 35 is inserted into the locked part 34, and the dental anchor 33 and the auxiliary anchor 35 are vertically spaced from each other.

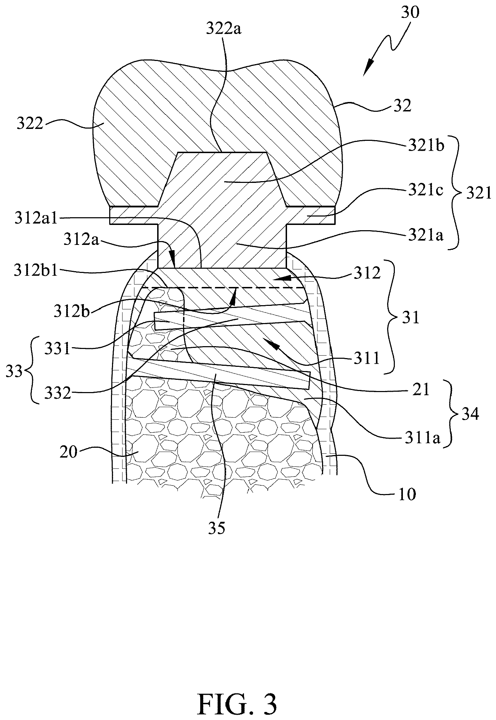

However, it is understood the description that both of the dental anchor 33 and the auxiliary anchor 35 are inserted into the narrowed bone top 21 of the alveolar bone 20 from the independent connecting body 311a of the base portion 31 is only illustrative for easy explanation of the present invention. In other embodiments, the dental anchor 33 and the auxiliary anchor 35 can be inserted into the locked part 34 from different directions. For example, in an operable embodiment as shown in Fig. 3, the dental anchor 33 is inserted from the independent connecting body 311a of the base portion 31 toward the narrowed bone top 21 of the alveolar bone 20 into the locked part 34, while the auxiliary anchor 35 is inserted from narrowed bone top 21 into the independent connecting body 311a. In this embodiment, the dental anchor 33 and the auxiliary anchor 35 are inserted into the locked part 34 in two directions oblique to each other.

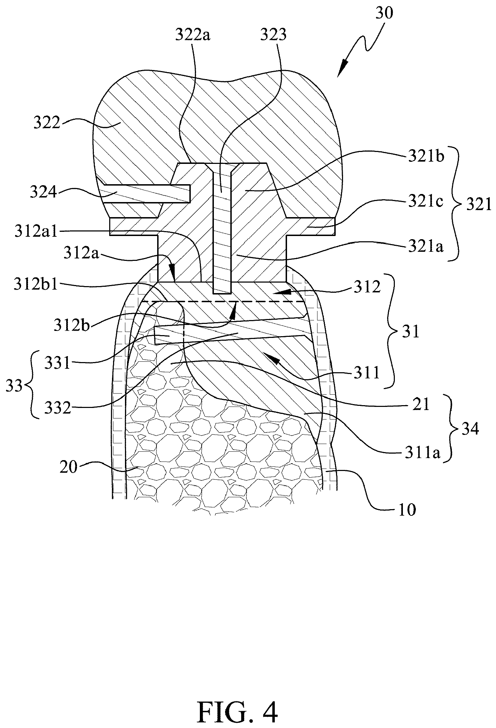

Please refer to Fig. 4 that shows a third embodiment of the present invention. Third embodiment is different from the first one in that the tooth portion 32 further includes a fastening screw 323 and a locating element 324. As shown in Fig. 4, the fastening screw 323 is downward threaded through the abutment 321 of the tooth portion 32 into the upper connecting section 312 of the base portion 31, such that the abutment 321 is firmly connected to the base portion 31, and the crown 322 is covered on a top of the fastening screw 323. On the other hand, the locating element 324 is threaded through the crown 322 of the tooth portion 32 into the abutment 321 to be locked thereto, such that the abutment 321 and the crown 322 are fixedly connected to each other through the locating element 324.

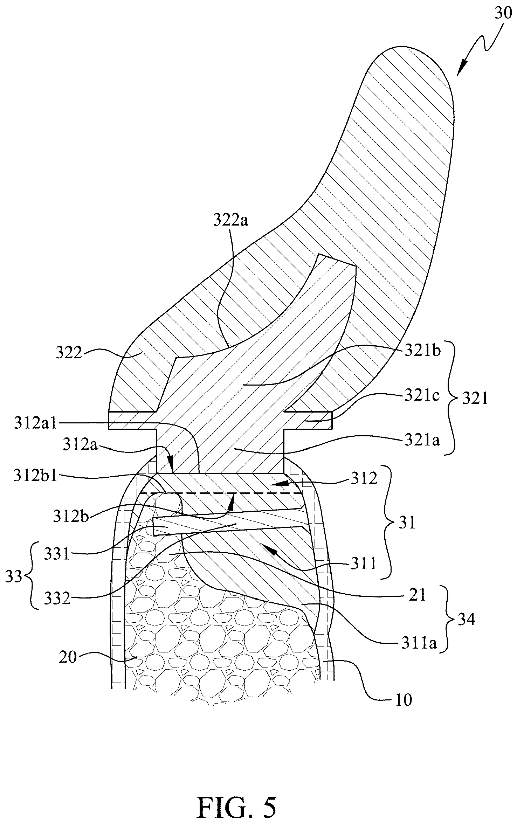

Please refer to Fig. 5 that shows a fourth embodiment of the present invention configured for a patient having a missing tooth that is originally misaligned with other teeth. In this case, the abutment 321 can be changed in its shape to meet the patient's particular teeth condition. As shown in Fig. 5, the first end 321a of the abutment 321 is similarly formed as a bottom portion for contacting with the connecting surface 312a1, while the second end 321b of the abutment 321 is formed into a top portion slightly inclined relative to the first end 321a, such that the crown 322 of the tooth portion 32 mounted on the abutment 321 is also inclined in a direction to match the original teeth occlusion. Thus, the bone-bonded artificial tooth structure 30 according to the present invention can also be applied to misaligned original teeth.

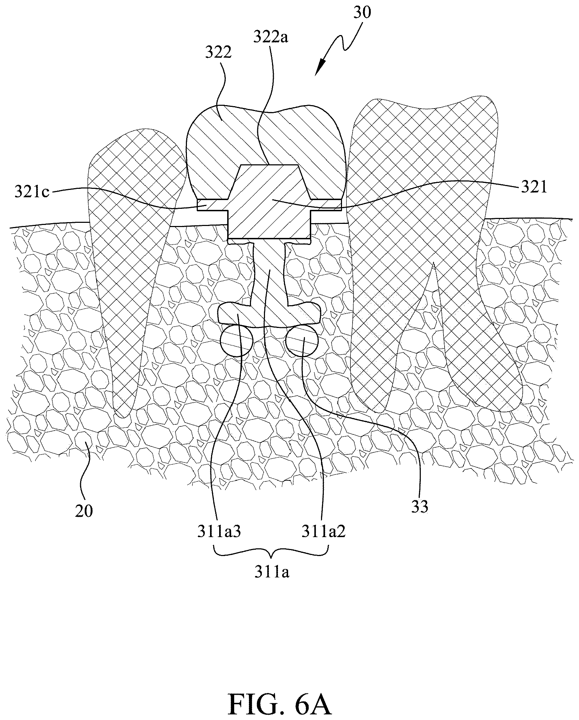

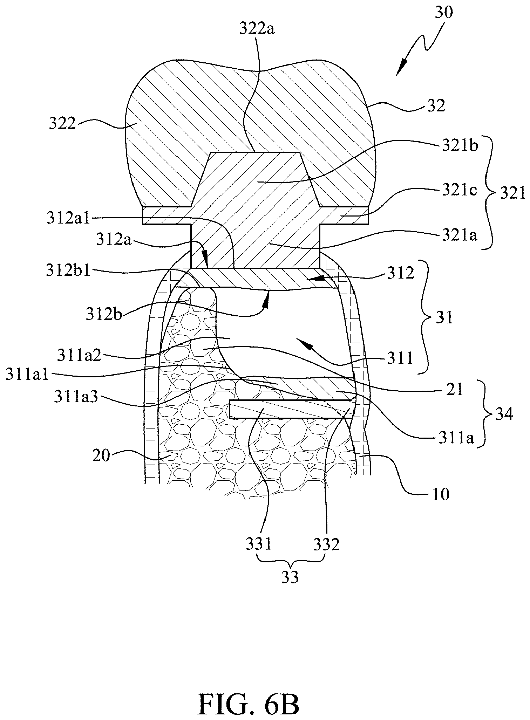

Please refer to Figs. 6A and 6B that show a fifth embodiment of the present invention. In this embodiment, the base portion 31 is formed by 3D printing to have a substantially T-shaped independent connecting body 311a, which includes a vertical section 311a2 formed below the upper connecting section 312 and a horizontal section 311a3 formed at a lower end of the vertical section 311a2. As shown in Fig. 6B, when the first anchoring section 331 of the dental anchor 33 is inserted into the narrowed bone top 21 of the alveolar bone 20, the second anchoring section 332 of the dental anchor 33 is set outside of the independent connecting body 311 a of the base portion 31 and located below the horizontal section 311a3 to abut against an underside of the horizontal section 311a3.

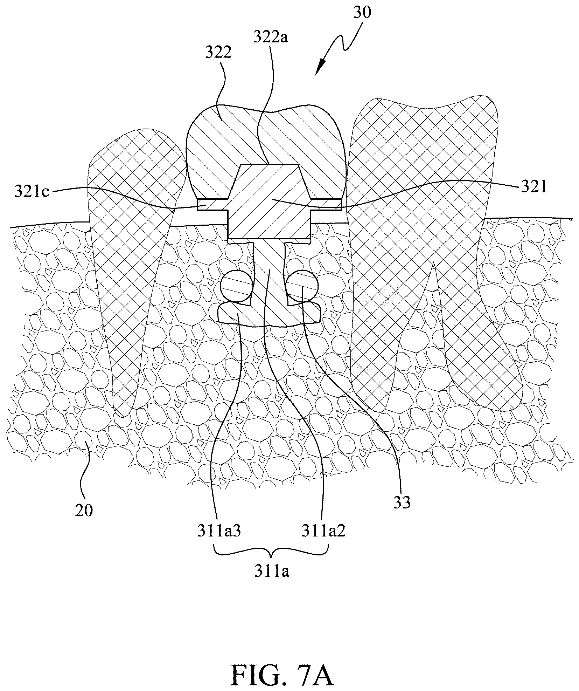

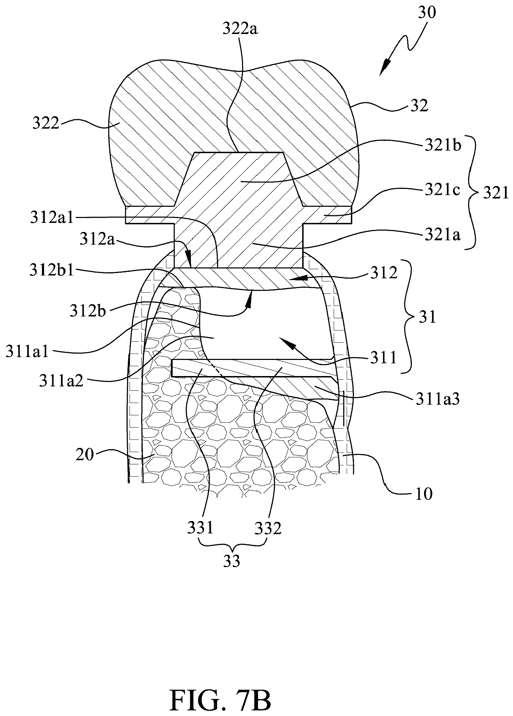

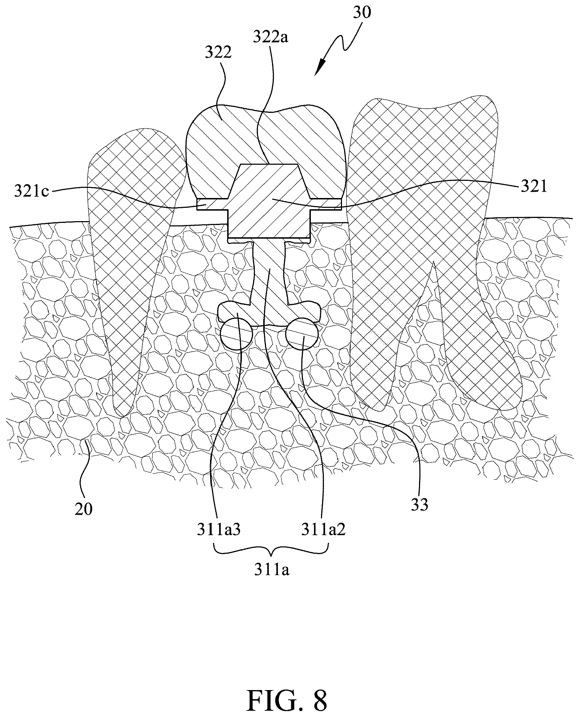

However, it is understood the description that the second anchoring section 332 of the dental anchor 33 is in contact with the underside of the horizontal section 311a3 is only illustrative to facilitate easy explanation of the present invention. In another operable embodiment as shown in Figs. 7A and 7B, the second anchoring section 332 is located above the horizontal section 311 a3 to abut on an upper side of the horizontal section 311a3. Further, in a further operable embodiment as shown in Fig. 8, the second anchoring section 332 is protruded from the independent connecting body 311a with only a small part set outside of the horizontal section 311a3.

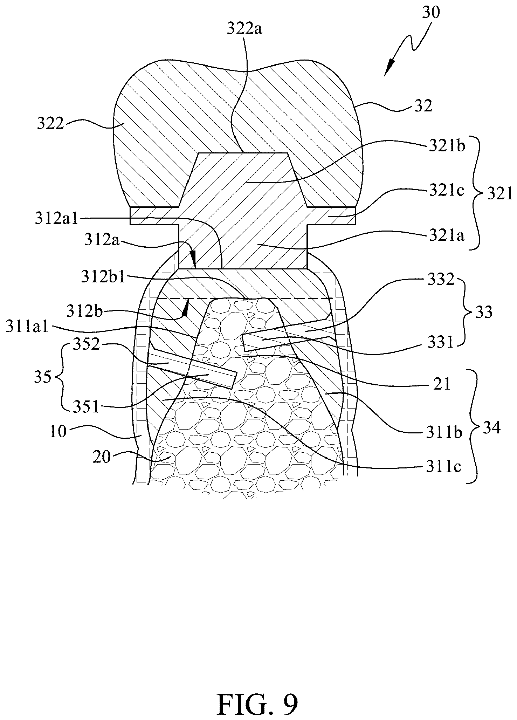

Please refer to Fig. 9 that shows a sixth embodiment of the present invention. The sixth embodiment is different from the second one in that the lower connecting section 311 has a different structural configuration. As shown, the lower connecting section 311 of the base portion 31 in the sixth embodiment includes a first lower connecting body 311b and a second lower connecting body 311c spaced from the first lower connecting body 311b, and the pressing surface 312b1 of the upper connecting section 312 is located between the first lower connecting body 311b and the second lower connecting body, 311c, such that the first lower connecting body 311b and the second lower connecting body, 311c are located at two opposite sides of the pressing surface 312b1. Besides, the dental anchor 33 is inserted from the first lower connecting body 311b into the narrowed bone top 21 of the alveolar bone 20, while the auxiliary anchor 35 is inserted from the second lower connecting body 311c into the narrowed bone top 21.

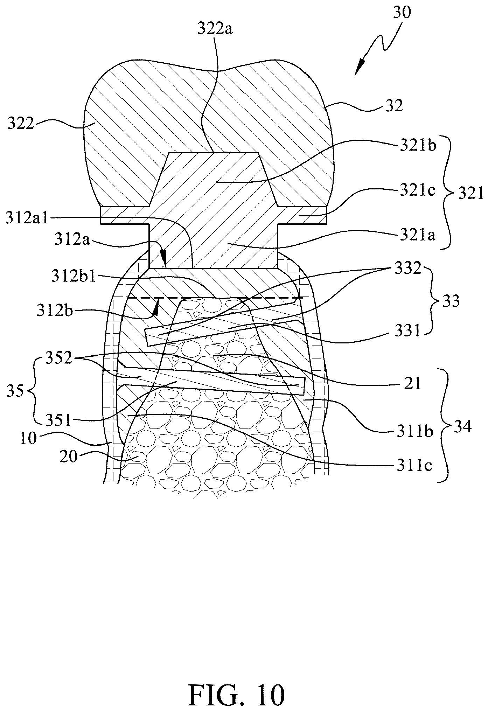

However, it is understood the description that the dental anchor 33 and the auxiliary anchor 35 are inserted into only the narrowed bone top 21 is simply illustrative to facilitate easy explanation of the present invention. In another operable embodiment as shown in Fig. 10, when inserting the dental anchor 33 into the locked part 34, the dental anchor 33 is extended through the first lower connecting body 311b of the lower connecting section 311 and the narrowed bone top 21 of the alveolar bone 20 into the second lower connecting body 311b of the lower connecting section 311 sequentially, such that the dental anchor 33 has one first anchoring section 331 set in the narrowed bone top 21 and two second anchoring sections 332, one of the latter is set in the first lower connecting body 311b while the other is set in the second lower connecting body 311c, with the first anchoring section 331 located between the two second anchoring sections 332. On the other hand, when inserting the auxiliary anchor 35 into the locked part 34, the auxiliary anchor 35 is extended through the second lower connecting body 311c and the narrowed bone top 21 into the first lower connecting body 311b sequentially, such that the auxiliary anchor 35 has one first auxiliary section 351 set in the narrowed bone top 21 as the first anchoring section 331, and two second auxiliary sections 352, one of the two second auxiliary sections 352 is set in the second lower connecting body 311c while the other second auxiliary sections 352 is set in the first lower connecting body 311b, with the first auxiliary section 351 located between the two second auxiliary sections 352. As can be seen in Fig. 10, the dental anchor 33 and the auxiliary anchor 35 are inserted into the locked part 34 in two oblique directions.

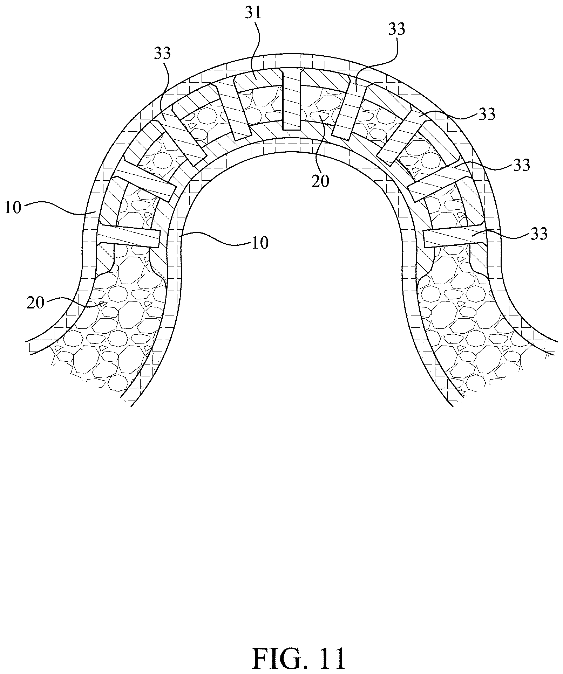

Please refer to Fig. 11 that shows a seventh embodiment of the present invention. In the seventh embodiment, the base portion 31 is a curved long strip having a substantially upside down U-shaped configuration for applying to an atrophied alveolar bone 20 without ridges. In this case, a plurality of spaced dental anchors 33 can be horizontally inserted into the base portion 21, so as to form multiple anchoring points between the base portion 21 and the alveolar bone 20 to ensure increased supporting stability.

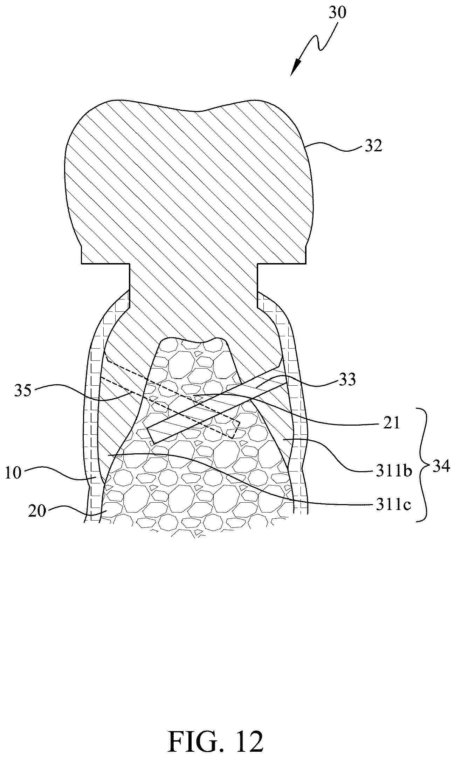

Please refer to Fig. 12 that shows an eighth embodiment of the present invention. In the eighth embodiment, the base portion 31 and the tooth portion 32 are integrally formed using the same material to constitute the bone-bonded artificial tooth structure 30. In this embodiment, the dental anchor 33 and the auxiliary anchor 35 are inserted into the locked part 34 in two oblique directions, such that they are separately set at a front and a rear location relative to one another, and the dental anchor 33 has a length extended beyond the auxiliary anchor 35, i.e. the dental anchor 33 and the auxiliary anchor obliquely cross each other.

Briefly, the bone-bonded artificial tooth structure according to the present invention can be applied to a patient who has one or more missing teeth, including incisors, canines, premolars or molars, or has misaligned teeth, so long as the patient does not involve other dental diseases.

The present invention has been described with some preferred embodiments and it is understood that many changes and modifications in the described embodiments can be carried out without departing from the scope and the spirit of the invention that is intended to be limited only by the appended claims.

## Claims

1. A bone-bonded artificial tooth structure for fixing to a patient's alveolar bone that is partially atrophied to form a narrowed bone top and covered by the patient's gum, comprising:
a base portion being entirely fixed below the gum and including a lower connecting section that being located lower than a highest point of the narrowed bone top, and an upper connecting section that being located higher than the highest point of the narrowed bone top; the lower connecting section defining a three-dimensional surface completely corresponding to a configuration of a side wall surface of the narrowed bone top, allowing the lower connecting section to fitly and tightly contact with the narrowed bone top; the lower connecting section and the narrowed bone top together forming a locked part that has an overall thickness larger than that of the narrowed bone top; and one side of the upper connecting section located farther away from the narrowed bone top defining a smooth connecting surface;
a tooth portion being fixed to the connecting surface of the base portion and being in contact with the gum; and
a dental anchor, a partial length of the dental anchor is inserted into the narrowed bone top and defined as a first anchoring section, and other remaining length of the dental anchor being contacted with the base portion and defined as a second anchoring section, such that the base portion is restricted by the dental anchor from displacing relative to the narrowed bone top; and
the lower connecting section being T-shaped in configuration to have a vertical section and a horizontal section located at a lower end of the vertical section; and the second anchoring section being set outside of the lower connecting section and abutted on an upper side of the horizontal section.

2. The bone-bonded artificial tooth structure as claimed in claim 1, wherein one side of the upper connecting section opposed to the connecting surface is defined as a bottom side; the bottom side having a partial area being formed at the lower connecting section; and other remaining area of the bottom side being defined as a pressing surface that is in contact with the highest point of the narrowed bone top.

3. The bone-bonded artificial tooth structure as claimed in claim 2, wherein the lower connecting section is formed of a single independent connecting body that is located to one side of the pressing surface, such that the narrowed bone top has one side in contact with the independent connecting body; and another side of the narrowed bone top farther away from the independent connecting body being in contact with the gum that covers the alveolar bone.

4. The bone-bonded artificial tooth structure as claimed in claim 2, wherein the lower connecting section includes a first lower connecting body and a second lower connecting body spaced from the first lower connecting body; the first lower connecting body and the second lower connecting body being separately located at two opposite sides of the pressing surface of the upper connecting section, and the narrowed bone top being located between the first lower connecting body and the second lower connecting body.

5. The bone-bonded artificial tooth structure as claimed in claim 1, wherein the tooth portion includes an abutment and a crown; the abutment having a first end and a second end located at two opposite ends; the first end being connected to the connecting surface and adjoining to the patient's gum covering the alveolar bone; and the second end being connected to the crown.

6. The bone-bonded artificial tooth structure as claimed in claim 5, wherein the tooth portion further includes a fastening screw; the fastening screw being threaded through the abutment into the base portion to firmly connect the abutment to the base portion; and the crown being covered on a top of the fastening screw.

7. The bone-bonded artificial tooth structure as claimed in claim 5, wherein the tooth portion further includes a locating element; and the locating element being threaded through the crown into the abutment.

8. The bone-bonded artificial tooth structure as claimed in claim 5, wherein the abutment is configured that the second end is inclined relative to the first end.

9. The bone-bonded artificial tooth structure as claimed in claim 1, wherein the base portion and tooth portion are integrally formed by using the same material.
